# EUROPÄISCHE PATENTSCHRIFT

(11) **EP 3 757 404 B1**
(45) Veröffentlichungstag und Bekanntmachung des Hinweises auf die Patenterteilung: **05.08.2026**
(21) Anmeldenummer: 20182750.8
(22) Anmeldetag: 27.06.2020
(51) Int. Cl.: F16B 5/02, F16B 13/00, E04B 1/76, F16B 33/00, F16B 37/12, F16B 43/00

(54) **ISOLIERKÖRPER FÜR EINE BEFESTIGUNGSVORRICHTUNG ZUR WÄRMEBRÜCKENFREIEN BEFESTIGUNG EINES GEGENSTANDES AN EINEM EINE DÄMMSCHICHT AUFWEISENDEN UNTERGRUND, UND BEFESTIGUNGSVORRICHTUNG MIT EINEM SOLCHEN ISOLIERKÖRPER**
INSULATING BODY FOR A FIXING DEVICE FOR FASTENING AN OBJECT WITHOUT HEAT BRIDGES TO A SUBSTRATE HAVING AN INSULATING LAYER, AND FIXING DEVICE COMPRISING SUCH AN INSULATING BODY
CORPS ISOLANT POUR UN DISPOSITIF DE FIXATION PERMETTANT DE FIXER SANS PONT THERMIQUE UN OBJET À UN SUBSTRAT COMPORTANT UNE COUCHE ISOLANTE ET DISPOSITIF DE FIXATION DOTÉ D'UN TEL CORPS ISOLANT

(30) Priorität: 28.06.2019 DE 202019103594 U
(43) Veröffentlichungstag der Anmeldung: 30.12.2020
(73) Patentinhaber: CELO Befestigungssysteme GmbH, 86551 Aichach (DE)
(72) Erfinder: Römpp, Marko, 86508 Rehling (DE)
(74) Vertreter: Jannig & Repkow Patentanwälte PartG mbB

(56) Entgegenhaltungen:
- EP-A2- 0 811 773
- EP-A2- 1 293 685
- EP-A2- 2 416 018
- DE-A1- 102013 105 443
- GB-A- 2 453 010
- JP-A- 2018 017 081

## Beschreibung

Die vorliegende Erfindung betrifft einen Isolierkörper für eine Befestigungsvorrichtung zur wärmebrückenfreien Befestigung eines Gegenstandes an einem eine Dämmschicht aufweisenden Untergrund, genauer gesagt einen Isolierkörper gemäß dem Oberbegriff des Patentanspruchs 1, sowie eine Befestigungsvorrichtung mit einem solchen Isolierkörper, sowie ein Verfahren gemäß dem Oberbegriff des Patentanspruchs 15.

Zur Befestigung eines Gegenstandes an einem eine Dämmschicht aufweisenden Untergrund, beispielsweise an einer mittels eines Wärmedämmverbundsystems gedämmten Wand eines Gebäudes existieren grundsätzlich zwei Möglichkeiten.

Die erste Befestigungsmöglichkeit besteht darin, den Gegenstand beispielsweise unter Verwendung eines in die Dämmschicht gesetzten Dübels oder einer direkt in die Dämmschicht eingedrehten Schraube an der Dämmschicht zu verankern. Da die beispielsweise durch eine Polystyrol-Platte gebildete Dämmschicht eine relativ geringe Steifigkeit und Festigkeit aufweist, lassen sich durch diese Art der Befestigung jedoch nur relativ leichte Gegenstände wie Leisten, Lampen, Briefkästen etc. befestigen.

Die zweite, auch für schwerere Gegenstände wie beispielsweise Markisen, Satellitenschüsseln, etc. geeignete Befestigungsmöglichkeit besteht darin, die Befestigungsvorrichtung durch die Dämmstoffschicht hindurch zu führen und im Untergrund zu verankern. Eine hierfür geeignete Befestigungsvorrichtung ist beispielsweise das als "Thermax" bezeichnete Produkt der fischerwerke GmbH & Co. KG, Klaus-Fischer-Straße 1, D-72178 Waldachtal.

Das Produkt "Thermax" enthält einen Isolierkörper gemäß dem Oberbegriff des Patentanspruchs 1. Von den daran angebrachten / anzubringenden Befestigungsmitteln werden das erste Befestigungsmittel durch eine in den Isolierkörper eindrehbare Schraube gebildet, und das zweite Befestigungsmittel durch eine Stockschraube, deren vom Isolierkörper abgewandtes Ende in einen in den Untergrund eingebrachten Dübel eingedreht wird. Alternativ kann das erste Befestigungsmittel durch einen Gewindestift gebildet werden, an welchem der zu befestigende Gegenstand unter Verwendung einer auf den Gewindestift aufgeschraubten Mutter befestigbar ist, und kann das zweite Befestigungsmittel durch eine Gewindestange gebildet werden, die unter Verwendung eines Mörtels oder Klebers in einem im Untergrund gebohrten Loch verankert wird. Zur Montage eines Gegenstandes unter Verwendung der bekannten Befestigungsvorrichtung Thermax an einer Wand sind ausweislich der vom Hersteller herausgegebenen Montageanleitung (siehe Seiten 5 und 6 des unter https://www.fischer.de/-/media/fixingsys-tems/fide/service/informationsmaterial/documents/prospekte/th ermax.ashx downloadbaren Dokuments "fischer Thermax") bis zu 10 Arbeitsschritte erforderlich. Allein das Ausfräsen der Dämmschicht, um Platz für den darin zu liegen kommenden Isolierkörper zu schaffen, erfordert schon zwei ausschließlich hierfür vorzusehende Arbeitsschritte. Genauer gesagt ist es so, dass nach dem Bohren eines sich bis in den Untergrund hinein erstreckenden Bohrlochs und vor der Befestigung des zweiten Befestigungsmittels im Untergrund in zwei separaten Arbeitsschritten
- zunächst der Isolierkörper zusammen mit dem daran angebrachten zweiten Befestigungsmittel unter Drehung derselben um die Längsachse in das Bohrloch eingeführt werden, sodass am Isolierkörper vorgesehene Fräsklingen die Dämmschicht und einen darauf aufgebrachten Putz von den Stellen entfernen, an welchen der Isolierkörper letztlich zu liegen kommen soll, und
- anschließend der Isolierkörper zusammen mit dem daran angebrachten zweiten Befestigungsmittel wieder aus dem Bohrloch herausgezogen und gesäubert wird.

Auch die Abdichtung des Ringspalts zwischen dem Isolierkörper und der Dämmschicht durch eine in diesen Spalt gespritzte flüssige Dichtmasse ist mit einem hohen Aufwand verbunden.

Das Produkt Thermax erfordert also, dass eine große Anzahl von Arbeitsschritten in der richtigen Reihenfolge und mit hoher Präzision ausgeführt wird. Die Verwendung von Thermax ist daher zeitaufwendig und birgt ein großes Risiko für Fehler während der Montage.

Unabhängig hiervon ist Fräsen sicher nicht die optimale Methode zur Bearbeitung der Dämmschicht. Fräsen ist nämlich ein spanendes Materialbearbeitungsverfahren und folglich denkbar ungeeignet für das nicht sonderlich feste und stabile Material, aus welchem Dämmschichten üblicherweise bestehen. Es besteht daher die Gefahr, dass der aus der Dämmschicht herausgefräste Bereich nicht unerheblich größer ist als es für die Aufnahme des Isolierkörpers notwendig wäre. Besonders groß werden diese Hohlräume, wenn beim Fräsen nicht mit höchster Präzision gearbeitet wurde, insbesondere zu weit in die Dämmschicht hinein gefräst wurde. Nicht umsonst muss laut Montageanleitung am Ende ein zwischen Isolierkörper und Dämmschicht vorhandener Spalt durch eine flüssige Dichtmasse abgedichtet werden.

Eine Einrichtung zur distanzierten Befestigung von Wärmedämmplatten an Wänden ist aus der EP0811773A2 bekannt. Ein Befestigungselement zum Einsetzen in eine Dämmplatte ist aus der DE 10 2013 105443 A1 bekannt.

Der vorliegenden Erfindung liegt daher die Aufgabe zugrunde, den Isolierkörper gemäß dem Oberbegriff des Patentanspruchs 1 und eine Befestigungsvorrichtung mit Isolierkörper derart weiterzubilden, dass dieser bzw. diese sich schneller, einfacher und dämmschichtschonender verarbeiten lassen.

Diese Aufgabe wird erfindungsgemäß durch den im Patentanspruch 1 beanspruchten Isolierkörper, die in Patentanspruch 14 beanspruchte Befestigungsvorrichtung, sowie das in Patentanspruch 15 beanspruchte Verfahren gelöst.

Die zylindrische Form des in der Dämmschicht zu liegen kommenden Teils des Isolierkörpers gemäß Patentanspruch 1 und dessen Außengewinde haben den positiven Effekt, dass der Isolierkörper einhergehend mit dem vorschriftsmäßigen Setzen der Befestigungsvorrichtung in die Dämmschicht eingeschraubt wird und sich eingehend damit auch ohne ein vorheriges Ausfräsen der Dämmschicht und einer darauf angebrachten Putzschicht in seine bestimmungsgemäße Position zieht.

Der erfindungsgemäße Isolierkörper kann einen Außendurchmesser aufweisen, der nur geringfügig größer ist als der Außendurchmesser des an diesem angebrachten zweiten Befestigungsmittels. Dies liegt unter anderem daran, dass auf dem Isolierkörper keine Fräsklingen und keine Kanäle zum Abführen des von den Fräsklingen abgetragenen Materials aufweisen müssen. Der verringerte Durchmesser des Isolierkörpers und die Komprimierbarkeit der Dämmschicht ermöglichen es, den Isolierkörper in das für das zweite Befestigungsmittel gebohrte Loch trotz des geringeren Durchmessers desselben einzudrehen, ohne dieses vorher durch Fräsen oder dergleichen aufweiten zu müssen.

Dies erweist sich in mehrfacher Hinsicht als vorteilhaft: Erstens kann das beim Stand der Technik erforderliche Fräsen oder ein sonstiger Dämmschicht-Abtrag für den Isolierkörper entfallen, sodass der Einsatz der den Isolierkörper enthaltenen Befestigungsvorrichtung weniger Arbeitsschritte erfordert und somit einfacher und schneller erfolgen kann und weniger fehleranfällig ist.

Zweitens entstehen beim Eindrehen des Isolierkörpers in die Dämmschicht keinerlei Zwischenräume zwischen Isolierkörper und Dämmschicht, sodass bereits ohne eine zusätzliche Abdichtung keine oder nur vernachlässigbar wenig Feuchtigkeit in die Dämmschicht eindringen kann.

Deshalb, und wegen der geringen Größe des Isolierkörpers hat das Einbringen des Isolierkörpers in die Dämmschicht drittens nur eine minimale Verschlechterung der durch die Dämmschicht bewirkten Wärmedämmung zur Folge.

Viertens lässt sich der Isolierkörper durch weiteres Eindrehen oder Ausdrehen zu jeder Zeit mit höchster Genauigkeit in seine bestimmungsgemäße Position bringen.

Der Isolierkörper im Verfahren gemäß Patentanspruch 15, genauer gesagt dessen von außen an der Dämmschicht anstehender bzw. anschlagender Kopf kommt über einem gegebenenfalls zwischen dem Isolierkörper-Schaft und der Dämmschicht vorhandenen Ringspalt zu liegen und überdeckt diesen flüssigkeitsdicht. Zur Verbesserung der Abdichtung kann auf der der Dämmschicht zugewandten Unterseite des Kopfes eine Dichtungsvorrichtung, beispielsweise ein Dichtungsring vorgesehen werden.

Vorteilhafte Weiterbildungen der Erfindung sind der folgenden Beschreibung, den Figuren und den Unteransprüchen entnehmbar.

Die Erfindung wird nachfolgend anhand von Ausführungsbeispielen unter Bezugnahme auf die Figuren näher erläutert. Es zeigen
- Figur 1A: eine Seitenansicht der im Folgenden näher beschriebenen Befestigungsvorrichtung,
- Figur 1B: eine Schnittdarstellung der in der Figur 1A gezeigten Befestigungsvorrichtung (Schnitt entlang der in der Figur 1A eingezeichneten Linie A-A),
- Figur 2A: eine Draufsicht auf einen Isolierkörper der in den Figuren 1A und 1B in ihrer Gesamtheit gezeigten Befestigungsvorrichtung, genauer gesagt eine Draufsicht auf den Kopf des Isolierkörpers,
- Figur 2B: eine Seitenansicht des Isolierkörpers von einer ersten Seite,
- Figur 2C: eine Schnittdarstellung des Isolierkörpers (Schnitt entlang der in der Figur 2B eingezeichneten Linie A-A),
- Figur 2D: eine Seitenansicht des Isolierkörpers von einer der ersten Seite gegenüber liegenden zweiten Seite,
- Figur 2E: eine weitere Schnittdarstellung des Isolierkörpers (Schnitt entlang der in der Figur 2D eingezeichneten Linie B-B),
- Figur 2F: eine erste perspektivische Darstellung des Isolierkörpers,
- Figur 2G: eine zweite perspektivische Darstellung des Isolierkörpers,
- Figur 3A: eine Draufsicht auf einen modifizierten Isolierkörper gemäß einem zweiten Ausführungsbeispiel, genauer gesagt eine Draufsicht auf den Kopf des Isolierkörpers,
- Figur 3B: eine Seitenansicht des modifizierten Isolierkörpers von einer ersten Seite,
- Figur 3C: eine Schnittdarstellung des modifizierten Isolierkörpers (Schnitt entlang der in der Figur 3B eingezeichneten Linie A-A),
- Figur 3D: eine Seitenansicht des modifizierten Isolierkörpers von einer der ersten Seite gegenüber liegenden zweiten Seite,
- Figur 3E: eine weitere Schnittdarstellung des modifizierten Isolierkörpers (Schnitt entlang der in der Figur 3D eingezeichneten Linie B-B),
- Figur 3F: eine erste perspektivische Darstellung des modifizierten Isolierkörpers, und
- Figur 3G: eine zweite perspektivische Darstellung des modifizierten Isolierkörpers.

Die im Folgenden näher beschriebene Befestigungsvorrichtung ist eine Befestigungsvorrichtung zur Befestigung eines Gegenstandes an einem eine Dämmschicht aufweisenden Untergrund. Solche Befestigungsvorrichtungen werden häufig auch als Abstandshalter bezeichnet.

Der Untergrund wird im betrachteten Beispiel durch eine Mauer eines Gebäudes gebildet, die beispielsweise aus Ziegelsteinen oder Beton hergestellt ist, aber prinzipiell auch unter Verwendung eines beliebigen anderen Wandbaustoffes hergestellt sein kann.

Die Dämmschicht ist im betrachteten Beispiel eine auf den Untergrund aufgebrachte Wärmedämmschicht, genauer gesagt eine durch Wärmedämmverbundsystem (WDVS)-Platten gebildete Wärmedämmschicht. Solche Platten bestehen üblicherweise aus geschäumtem Kunststoff, beispielsweise aus geschäumtem Polystyrol, können aber auch aus einem beliebigen anderen Dämmmaterial bestehen. Auf der vom Untergrund abgewandten Seite der Dämmschicht kann eine Putzschicht aufgebracht sein. Dies dürfte in der Praxis sogar der Normalfall sein. Eine gegebenenfalls auf der Dämmschicht vorgesehene Putzschicht wird vorliegend der Dämmschicht zugerechnet. Wenn im Folgenden also von Dämmschicht die Rede ist, handelt es sich abhängig davon, ob die Dämmschicht verputzt ist oder nicht, um eine Dämmschicht mit oder ohne Putzschicht.

Die beschriebene Befestigungsvorrichtung enthält einen später noch genauer beschriebenen Isolierkörper, der eine thermische Trennung der am Isolierkörper angebrachten anderen Befestigungsvorrichtungskomponenten bewirkt und somit eine wärmebrückenfreie Befestigung des Gegenstandes am Untergrund ermöglicht.

Wie später noch genauer beschrieben wird, ist die Befestigungsvorrichtung dazu ausgelegt, am Untergrund verankert zu werden. Die Befestigungsvorrichtung ist daher zur Befestigung schwerer Gegenstände, beispielsweise zur Befestigung von Markisen an einer Mauer geeignet. Selbstverständlich können damit auch beliebige andere Gegenstände befestigt werden, wobei diese Gegenstände auch leichtere oder noch schwerere Gegenstände sein können.

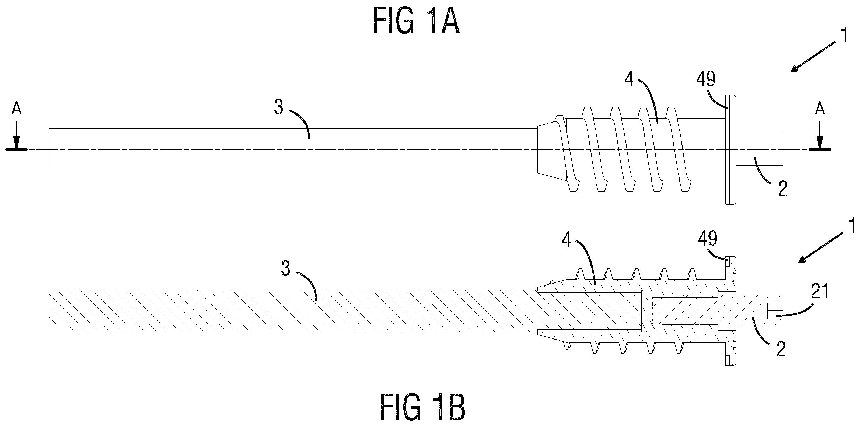

Die gesamte Befestigungsvorrichtung ist in den Figuren mit dem Bezugszeichen 1 bezeichnet. Wie aus den Figuren 1A und 1B ersichtlich ist, umfasst die Befestigungsvorrichtung 1
- den bereits erwähnten, in den Figuren mit dem Bezugszeichen 4 bezeichneten Isolierkörper,
- ein am Isolierkörper 4 angebrachtes erstes Befestigungsmittel 2, an welchem der zu befestigende Gegenstand anbringbar ist, und
- ein ebenfalls am Isolierkörper 4 angebrachtes zweites Befestigungsmittel 3 für die Verankerung der Befestigungsvorrichtung im Untergrund.

Das erste Befestigungsmittel 2 wird im betrachteten Beispiel durch einen ein Außengewinde aufweisenden Gewindestift gebildet. Das Außengewinde ist im betrachteten Beispiel ein metrisches Gewinde, beispielsweise ein M12-Gewinde. Grundsätzlich kann es sich aber auch um ein beliebiges anderes Gewinde handeln. Die Anbringung des am Gewindestift 2 anzubringenden Gegenstandes erfolgt beispielsweise unter Verwendung einer in den Figuren nicht gezeigten, auf den Gewindestift aufschraubbaren Mutter. Durch diese Mutter wird der zu befestigende Gegenstand am ersten Befestigungsmittel 2 befestigt. Obgleich es derzeit als optimal angesehen wird, einen Gewindestift als erstes Befestigungsmittel 2 zu verwenden, und den zu befestigenden Gegenstand unter Verwendung einer darauf aufgeschraubten Mutter anzubringen, ist dies keine zwingende Notwendigkeit. Das erste Befestigungsmittel könnte auch durch ein anderes Befestigungsmittel gebildet werden, an welchem der daran anzubringende Gegenstand anbringbar ist.

Das zweite Befestigungsmittel 3 wird im betrachteten Beispiel durch eine ein Außengewinde aufweisende Gewindestange gebildet. Das Außengewinde ist im betrachteten Beispiel ein metrisches Gewinde, beispielsweise ein M16-Gewinde. Grundsätzlich kann es sich aber auch um ein beliebiges anderes Gewinde handeln. Obgleich es derzeit als optimal angesehen wird, eine Gewindestange als zweites Befestigungsmittel zu verwenden, ist dies keine zwingende Notwendigkeit. Das zweite Befestigungsmittel 3 könnte auch durch ein anderes Befestigungsmittel gebildet werden, das am oder im Untergrund verankerbar ist.

Wie erwähnt sind das erste Befestigungsmittel 2 und das zweite Befestigungsmittel 3 am Isolierkörper 4 angebracht. Genauer gesagt sind sie an einander gegenüberliegenden Seiten des Isolierkörpers 4 angebracht, und zwar derart, dass die Längsachsen der Befestigungsmittel 2, 3, im betrachteten Beispiel also des Gewindestifts 2 und der Gewindestange 3, sowie des im Wesentlichen zylindrischen Isolierkörpers 4 miteinander fluchten.

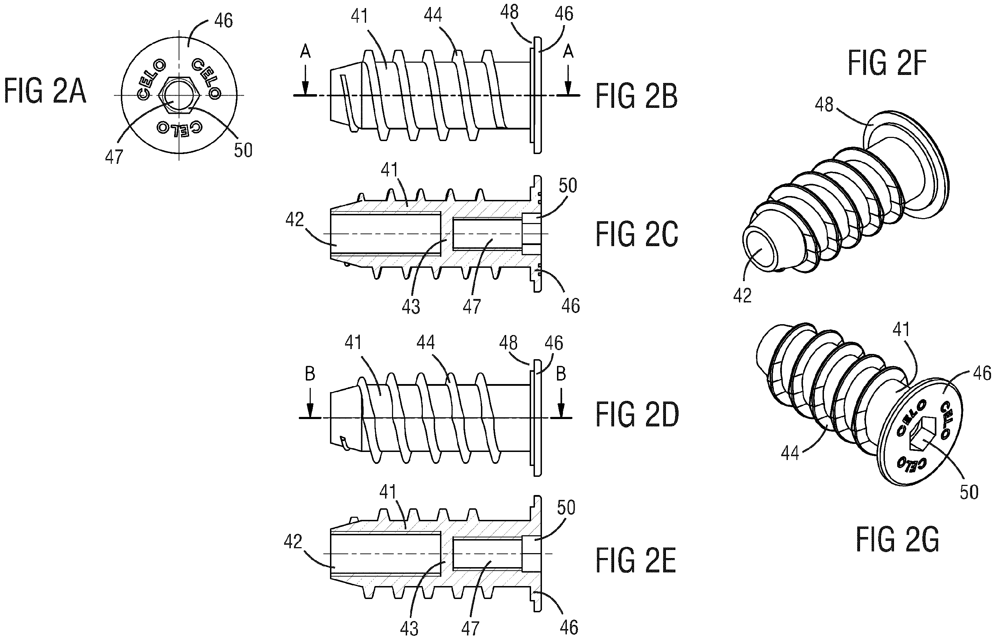

Wie am besten aus den Figuren 2A bis 2G ersichtlich ist, weist der Isolierkörper 4 einen zylindrischen Schaft 41 und einen an einer der Stirnseiten des Schafts 41 ausgebildeten Kopf 46 auf.

Am kopfseitigen Ende des Isolierkörpers 4 ist mittig eine in Längsrichtung des Isolierkörpers verlaufende erste zylinderförmige Aussparung 47 vorgesehen. Diese Aussparung 47 erstreckt sich durch den Kopf 46 hindurch bis in den Schaft 41 des Isolierkörpers 4 hinein und ist zur Aufnahme eines Endes des Gewindestifts 2 vorgesehen. Genauer gesagt ist die erste Aussparung 47 zum Einschrauben des Gewindestifts 2 ausgelegt. Sie ist so ausgebildet, dass ein bestimmungsgemäß darin eingeschraubter Gewindestift 2 fest darin fixiert ist. Eine zusätzliche Befestigung wie beispielsweise durch Kleben ist nicht erforderlich. Es dürfte einleuchten, dass der Gewindestift 2 oder ein sonstiges erstes Befestigungsmittel auch anders am Isolierkörper 4 angebracht / fixiert werden kann. Die Verbindung kann beispielweise durch Kleben, Schweißen oder eine beliebige sonstige Verbindungstechnik erfolgen.

Am gegenüberliegenden, also an dem vom Kopf 46 abgewandten Ende des Schafts 41 ist mittig eine in Längsrichtung des Schafts verlaufende zweite zylinderförmige Aussparung 42 vorgesehen. Diese zweite Aussparung 42 erstreckt sich in den Schaft 41 hinein und ist zur Aufnahme eines Endes der Gewindestange 3 vorgesehen. Genauer gesagt ist die zweite Aussparung 42 zum Einschrauben der Gewindestange 3 ausgelegt. Sie ist so ausgebildet, dass eine bestimmungsgemäß darin eingeschraubte Gewindestange fest darin fixiert ist. Eine zusätzliche Befestigung wie beispielsweise durch Kleben ist nicht erforderlich. Es dürfte einleuchten, dass der Gewindestange 3 oder ein sonstiges zweites Befestigungsmittel auch anders am Isolierkörper 4 angebracht / fixiert werden kann. Die Verbindung kann beispielweise durch Kleben, Schweißen oder eine beliebige sonstige Verbindungstechnik erfolgen.

Der Isolierkörper 4, die erste Aussparung 47 und die zweite Aussparung 42 sind so angeordnet, dass deren Längsachsen miteinander fluchten. Die Aussparungen 42, 47 gehen nicht ineinander über. Sie sind durch eine zwischen ihnen liegende Trennwand 43 voneinander getrennt. Diese Trennwand 43 verhindert, dass der Gewindestift 2 und die Gewindestange 3 im in die Aussparungen 42, 47 eingeschraubten Zustand miteinander in Berührung kommen können. Deshalb, und weil der Isolierkörper 4 aus einem Kunststoff, beispielsweise aus einem glasfaserverstärkten Kunststoff besteht und somit relativ gute Wärmedämmeigenschaften aufweist, sind der Gewindestift 2 und die Gewindestange 3, die beide aus Metall bestehen, durch den Isolierkörper 4 thermisch voneinander getrennt, so dass der unter Verwendung der Befestigungsvorrichtung 1 am Untergrund zu befestigende Gegenstand wärmebrückenfrei am Untergrund verankerbar ist.

Der Schaft 41 hat einen Außendurchmesser, der kleiner ist als der Außendurchmesser des Kopfes 46, aber größer ist als der Außendurchmesser der in den Schaft eingeschraubten Gewindestange 3. An dem vom Kopf 46 abgewandten Ende des Schafts 41 verjüngt sich dieser bis fast auf den Außendurchmesser der Gewindestange 3. Der Schaft 41 ist an seiner Außenseite mit einem Außengewinde 44 versehen.

Der Schaft 41 ist derjenige Teil des Isolierkörpers 4, der bei bestimmungsgemäßer Verwendung innerhalb der Dämmschicht zu liegen kommt. Das am Schaft 41 ausgebildete Außengewinde 44 ermöglicht es, dass der Schaft in die Dämmschicht, genauer gesagt in ein in der Dämmschicht vorgesehenes Bohrloch eingeschraubt wird. Da es sich bei dem Außengewinde 44 um ein selbstfurchendes Gewinde handelt, kann der Durchmesser des Bohrlochs kleiner sein als der Außendurchmesser des Schafts 41. Unabhängig hiervon ist die Länge des Schafts 41 vorzugsweise kleiner als die Dicke der Dämmschicht.

Bei bestimmungsgemäßer Verwendung der Befestigungsvorrichtung wird der Schaft so weit in die Dämmschicht eingeschraubt, bis der Kopf 46 von außen an der Dämmschicht bzw. dem darauf aufgebrachten Putz anschlägt.

Der Kopf 46 ist im betrachteten Beispiel scheibenförmig ausgebildet, könnte aber auch eine andere Kopfgeometrie aufweisen. Es könnte sich also beispielsweise auch um einen Zylinderkopf, einen Flachrundkopf, einen Halbrundkopf, einen Senkkopf, einen Tellerkopf, einen Trompetenkopf, einen Linsensenkkopf, einen Senkrundkopf oder einen beliebigen sonstigen Kopf handeln. Unabhängig von der Kopfgeometrie bildet der Kopf 46 jeweils den stirnseitigen Abschluss der den Kopf tragenden Isolierkörperseite.

Es erweist sich als vorteilhaft, wenn an der der Dämmschicht zugewandten Seite des Kopfes 46 eine Dichtungsvorrichtung, beispielsweise ein Dichtungsring 49 vorgesehen wird. Bei bestimmungsgemäßer Montage der Befestigungsvorrichtung kommt dieser Dichtungsring 49 zwischen dem Kopf und der Dämmschicht (bzw. der Putzschicht) zu liegen. Im betrachteten Beispiel ist an der der Dämmschicht zugewandten Seite des Kopfes 46 eine zur Aufnahme des Dichtungsrings 49 ausgelegte ringförmige Aussparung 48 vorgesehen. Diese Aussparung 48 verläuft vorliegend entlang des äußeren Randes des Kopfes 46, könnte aber auch weiter innen verlaufen. Im betrachteten Beispiel ist der Dichtungsring 49 in die Aussparung eingeklebt. Die Befestigung des Dichtungsringes 49 am Isolierkörper 4 könnte prinzipiell jedoch auch auf beliebige andere Art und Weise erfolgen.

Durch die Dichtung wird verhindert, dass Feuchtigkeit zwischen dem Isolierkörper 4 und der Dämmschicht bzw. der Putzschicht in diese eindringen kann. An dieser Stelle sei angemerkt, dass durch das Einschrauben des Isolierkörpers 4 in die Dämmschicht ohnehin keine oder allenfalls sehr kleine Zwischenräume zwischen Isolierkörper und Dämmschicht entstehen, über welche Feuchtigkeit in die Dämmschicht eintreten kann.

Der Kopf 46 (mit oder ohne Dichtungsvorrichtung) kann nicht nur bei dem hier vorgestellten Isolierkörper 4, sondern auch bei beliebigen anderen Isolierkörpern vorgesehen werden. Insbesondere kann ein solcher Kopf auch bei anders ausgebildeten und/oder bemessenen Isolierkörperschäften vorgesehen werden.

Es erweist sich als vorteilhaft, wenn an der von der Dämmschicht abgewandten Seite des Kopfes 46 ein Werkzeugansatz 50 vorgesehen ist, an welchem ein Werkzeug zum Einschrauben des Isolierkörpers in die Dämmschicht ansetzbar ist. Im betrachteten Beispiel handelt es sich um eine Vertiefung, die zum Ansetzen eines Innensechskant-Schlüssels ausgelegt ist. Selbstverständlich kann der Werkzeugansatz 50 auch zum Ansetzen eines beliebigen anderen Werkzeuges zum Einschrauben des Isolierkörpers in die Dämmschicht ausgelegt sein.

Wenn wie im betrachteten Beispiel ein Werkzeugansatz 50 vorgesehen ist, beginnt die erste Aussparung 47 erst am Boden des Werkzeugansatzes 50 und erstreckt sich von dort in den Schaft 41 hinein. Der Werkzeugansatz 50 ist in der Kopfmitte vorgesehen und ist konzentrisch zur ersten Aussparung 47 angeordnet.

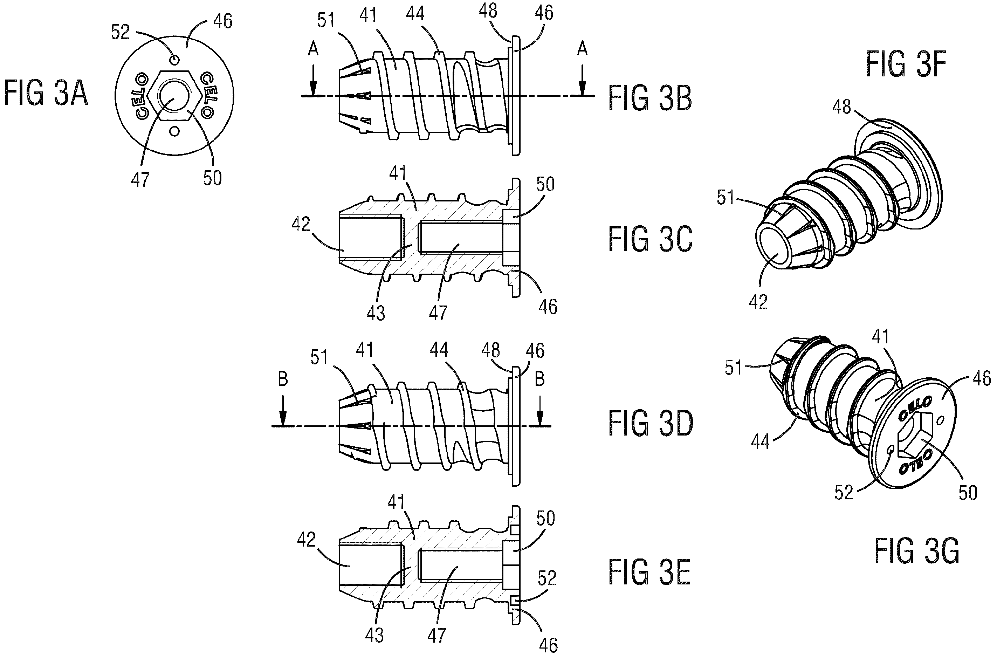

In den Figuren 3A bis 3G ist ein modifizierter Isolierkörper gemäß einem zweiten Ausführungsbeispiel gezeigt. Dieser modifizierte Isolierkörper entspricht großteils dem zuvor beschriebenen Isolierkörper gemäß den Figuren 2A bis 2G. Identische oder einander entsprechende Bestandteile sind mit den selben Bezugszeichen bezeichnet.

Aufgrund der vielen Übereinstimmungen werden im Folgenden nur einige der vorhandenen Unterschiede zwischen dem Isolierkörper gemäß Figur 2 und dem modifizierten Isolierkörper gemäß Figur 3 beschrieben. Es sei bereits an dieser Stelle darauf hingewiesen, dass die Unterschiedsmerkmale unabhängig voneinander einzeln oder in beliebigen Kombinationen vorgesehen werden können.

Einer der vorhandenen Unterschiede betrifft die Geometrie des Isolierkörpers. Der modifizierte Isolierkörper 4 gemäß Figur 3 ist kürzer, und auch die Längen der Aussparungen 42, 44 im Isolierkörper sind unterschiedlich. Hierzu sei allgemein angemerkt, dass die Längen des Isolierkörpers und der Aussparungen 42, 47 grundsätzlich unabhängig voneinander in einem weiten Bereich variierbar sind. Die erforderlichen Längen hängen unter anderem von der Belastbarkeit des Materials und von den zu erwartenden Kräften ab, die auf den Isolierköper wirken.

Ein weiterer Unterschied besteht darin, dass beim modifizierten Isolierkörper 4 gemäß Figur 3 an dessen dem Kopf 46 gegenüber liegenden Ende, genauer gesagt an der Außenseite des sich konisch verjüngenden stirnseitigen Endabschnittes Rippen 51 vorgesehen sind. Diese Rippen 51 sind im betrachteten Beispiel Längsrippen. Durch diese Rippen 51 erfolgt beim Eindrehen des Isolierkörpers 4 in die Dämmschicht ein zumindest teilweiser Abtrag der Dämmschichtabschnitte, mit welchen die Rippen in Berührung kommen. Es dürfte einleuchten, dass die Rippen 51 zu diesem Zweck nicht zwangsläufig in Längsrichtung verlaufen müssen, sondern auch einen anderen Verlauf aufweisen können, beispielsweise einen mehr oder weniger stark ausgeprägten schrägen Verlauf aufweisen können.

Ein weiterer Unterschied besteht darin, dass an der im bestimmungsgemäß montierten Zustand des modifizierten Isolierkörpers von der Dämmschicht abgewandten Seite des Kopfes 46 zwei einander diametral gegenüber liegende, in Längsrichtung des Isolierkörpers verlaufende Löcher 52 vorgesehen sind. Diese Löcher sind zur Aufnahme von zugeordneten Zapfen eines entsprechenden Werkzeuges, genauer gesagt eines sogenannten Zweilochmutterndrehers ausgelegt. Durch Einstecken der Zapfen dieses Werkzeuges in die Löcher 52 und eine entsprechende Bewegung des Werkzeuges ist der Isolierkörper um seine Längsachse drehbar, also weiter in die Dämmschicht eindrehbar oder aus der Dämmschicht herausdrehbar. Da sich die Löcher 52 zwischen dem Werkzeugansatz 50 und dem Rand des Kopfes 46 befinden, werden sie anders als der Werkzeugansatz 50 nicht durch einen bereits in die Aussparung 47 eingedrehten Gewindestift 2 bedeckt. Dies hat den positiven Effekt, dass das Werkzeug auch bei schon in die Aussparung eingedrehtem Gewindestift 2 bestimmungsgemäß mit den Löchern 52 in Eingriff bringbar ist und somit der Isolierkörper auch in diesem Zustand noch wunschgemäß bewegbar, beispielsweise nachjustierbar ist. Der Isolierkörper 4 kann auf diese Art und Weise auch komplett demontiert werden, was insbesondere dann, wenn der Gewindestift - aus welchem Grund auch immer - nicht mehr aus der Aussparung 47 entfernbar ist, von Vorteil ist.

Zur Befestigung eines Gegenstandes an einem eine Dämmschicht aufweisenden Untergrund unter Verwendung der Befestigungsvorrichtung 1 sind (unabhängig davon, welcher der vorstehend beschriebenen Isolierkörper 4 verwendet wird) der Reihe nach folgende Schritte auszuführen:
1. Bohren eines die Dämmschicht durchlaufenden und sich bis in den Untergrund hinein erstreckenden Bohrlochs
2. Injizieren eines Klebers oder Mörtels in den sich in den Untergrund hinein erstreckenden Bohrlochabschnitt
3. Einstecken des Isolierkörpers 4 mit vormontierter Gewindestange 3 ins Bohrloch und Eindrehen des Isolierkörpers mit Hilfe eines am Kopf 46 angesetzten Werkzeuges in die Dämmschicht bis zum Anschlagen des Kopfes an der Dämmschicht; mit dem Anschlagen des Kopfes hat der Isolierkörper seine bestimmungsgemäße Position innerhalb der Dämmschicht erreicht; auf diese Art und Weise wird automatisch sichergestellt, dass der Isolierkörper optimal weit in die Dämmschicht eingedreht ist und zugleich noch leicht aus der Dämmung herausragt; insbesondere kann dadurch unter anderem verhindert werden, dass der Isolierkörper zu weit in die Dämmschicht eingedreht wird, was zur Folge hätte, dass die Dämmschicht bzw. Putzschicht beschädigt wird, da sich die Last dann nicht auf der Befestigungsvorrichtung abstützen würde, sondern den Dämmstoff eindrücken würde; einhergehend mit dem Einschrauben des Isolierkörpers 4 gelangt die Gewindestange 3 in den mit Kleber oder Mörtel ausgefüllten Bohrlochabschnitt und wird durch den aushärtenden Kleber oder Mörtel im Untergrund verankert; da sich die Gewindestange 3 mit dem Isolierkörper 4 mitdreht, führt sie beim Eintritt in den mit Kleber oder Mörtel ausgefüllten Bohrlochabschnitt automatisch die von Kleber-/Mörtelherstellern empfohlene und für eine gute Verbindung erforderliche Drehbewegung aus; durch Schritt 3 wird der Isolierkörper 4 automatisch in seine bestimmungsgemäße Position gebracht und die Gewindestange 3 automatisch optimal im Untergrund verankert.
4. Eindrehen des Gewindestifts 2 in die zugeordnete erste Aussparung 47 des Isolierkörpers 4.
   Der Gewindestift 2 kann hierzu an seinem vom Isolierkörper 4 abgewandten Ende einen Werkzeugansatz 21 aufweisen, an welchem ein Werkzeug zum Einschrauben des Gewindestifts 2 in die Aussparung 47 ansetzbar ist. Im betrachteten Beispiel handelt es sich um eine Vertiefung, die zum Ansetzen eines Innensechskant-Schlüssels ausgelegt ist. Selbstverständlich kann der Werkzeugansatz 21 auch zum Ansetzen eines beliebigen anderen Werkzeuges zum Einschrauben des Gewindestifts 2 in die Aussparung 47 ausgelegt sein.
5. Bei Bedarf, beispielsweise wenn sich der Isolierkörper bei der Montage des Gewindestiftes 2 mit diesem mitbewegt: Halten des Isolierkörpers 4 in seiner Position oder Nachjustieren der Position des Isolierkörpers nach der Gewindestiftmontage unter Verwendung eines mit den Löchern 52 in Eingriff bringbaren Werkzeuges.
6. Befestigen des zu befestigenden Gegenstandes unter Verwendung einer auf den Gewindestift aufgeschraubten Mutter.

Eine solche Befestigung eines Gegenstandes an einem eine Dämmschicht aufweisenden Untergrund ist in einer minimalen Anzahl von Arbeitsschritten, also schnell und einfach durchführbar. Die einzelnen Arbeitsschritte, insbesondere der Arbeitsschritt 3 stellen weitestgehend sicher, dass die Befestigungsvorrichtung 1 automatisch bestimmungsgemäß montiert wird und keine Fehler gemacht werden können.

Der hier vorgestellte Isolierkörper 4 sowie die einen solchen Isolierkörper enthaltende Befestigungsvorrichtung erweisen sich also gleich in mehrfacher Hinsicht als sehr vorteilhaft.

### Bezugszeichenliste

- 1: Befestigungsvorrichtung
- 2: erstes Befestigungsmittel (zum Anbringen des zu befestigenden Gegenstandes)
- 3: zweites Befestigungsmittel (zur Verankerung von 1 im Untergrund)
- 4: Isolierkörper

- 21: Werkzeugansatz an 2

- 41: Schaft von 4
- 42: Aussparung für 3 in 41
- 43: Trennwand zwischen 42 und 47
- 44: Außengewinde an 41
- 46: Kopf von 4
- 47: Aussparung für 2 in 46 und 41
- 48: ringförmige Aussparung in 46 für Dichtung
- 49: Dichtungsring
- 50: Werkzeugansatz an 46
- 51: Rippen am vorderen Endabschnitt von 4
- 52: Loch in 46

## Patentansprüche

1. Isolierkörper (4) für eine Befestigungsvorrichtung (1) zur wärmebrückenfreien Befestigung eines Gegenstandes an einem eine Dämmschicht aufweisenden Untergrund, wobei der Isolierkörper so ausgebildet ist, dass an diesem
- ein erstes Befestigungsmittel (2) anbringbar ist, an welchem der zu befestigende Gegenstand befestigbar ist,
- und ein zweites Befestigungsmittel (3) anbringbar ist, das am Untergrund verankerbar ist,
wobei derjenige Teil (41) des Isolierkörpers, der dazu ausgelegt ist, innerhalb der Dämmschicht zu liegen zu kommen, durch einen ein Außengewinde (44) aufweisenden zylindrischen Körper gebildet wird.

2. Isolierkörper nach Anspruch 1, **dadurch gekennzeichnet, dass** das erste Befestigungsmittel (2) und das zweite Befestigungsmittel (3) an einander gegenüberliegenden Seites des Isolierkörpers (4) anbringbar sind.

3. Isolierkörper nach Anspruch 2 oder 3, **dadurch gekennzeichnet, dass** die Befestigungsmittel (2, 3) so am Isolierkörper (4) anbringbar sind, dass die Längsachsen der Befestigungsmittel und des Isolierkörpers miteinander fluchten.

4. Isolierkörper nach einem der vorhergehenden Ansprüche, **dadurch gekennzeichnet, dass** der Isolierkörper (4) zur Anbringung von durch Gewindestangen oder Gewindestifte gebildeten Befestigungsmitteln (2, 3) ausgelegt ist.

5. Isolierkörper nach einem der vorhergehenden Ansprüche, **dadurch gekennzeichnet, dass** der Isolierkörper (4) zylinderförmige Aussparungen (42, 47) aufweist, die zum Einschrauben der Befestigungsmittel (2, 3) ausgelegt sind.

6. Isolierkörper nach einem der vorhergehenden Ansprüche, **dadurch gekennzeichnet, dass** derjenige Teil (41) des Isolierkörpers (4), der dazu ausgelegt ist, innerhalb der Dämmschicht zu liegen zu kommen, durch einen in die Dämmschicht einschraubbaren Schaft gebildet wird.

7. Isolierkörper nach Anspruch 6, **dadurch gekennzeichnet, dass** der Schaft (41) dazu ausgelegt ist, in ein vorgebohrtes Loch in Dämmschicht eingeschraubt zu werden.

8. Isolierkörper nach Anspruch 6 oder 7, **dadurch gekennzeichnet, dass** dieser zum Einschrauben in eine Dämmschicht ausgelegt ist, deren Dicke größer als die Länge des Schafts (41) ist.

9. Isolierkörper nach einem der Ansprüche 6 bis 8, **dadurch gekennzeichnet, dass** der Isolierkörper (4) ferner einen Kopf (46) aufweist, dessen Außendurchmesser größer ist als der Au-βendurchmesser des Schafts (41), und der dazu ausgelegt ist, bei bestimmungsgemäßer Verwendung von außen an der Dämmschicht anzuschlagen.

10. Isolierkörper nach Anspruch 9, **dadurch gekennzeichnet, dass** an der der Dämmschicht zugewandten Seite des Kopfes (46) ein Dichtungsring (49) vorgesehen ist.

11. Isolierkörper nach Anspruch 10, **dadurch gekennzeichnet, dass** an der der Dämmschicht zugewandten Seite des Kopfes (46) eine zur Aufnahme des Dichtungsrings (49) ausgelegte Aussparung (48) vorgesehen ist.

12. Isolierkörper nach einem der Ansprüche 9 bis 11, **dadurch gekennzeichnet, dass** an der von der Dämmschicht abgewandten Seite des Kopfes (46) ein Werkzeugansatz (50) vorgesehen ist, an welchem ein Werkzeug zum Einschrauben des Isolierkörpers (4) in die Dämmschicht ansetzbar ist.

13. Isolierkörper nach einem der vorhergehenden Ansprüche, **dadurch gekennzeichnet, dass** das Außengewinde (44) des Isolierkörpers (4) ein selbstfurchendes Gewinde ist.

14. Befestigungsvorrichtung (1) zur wärmebrückenfreien Befestigung eines Gegenstandes an einem eine Dämmschicht aufweisenden Untergrund, mit
- einem Isolierkörper (4) gemäß einem der vorhergehenden Ansprüche,
- einem am Isolierkörper angebrachten ersten Befestigungsmittel (2), an welchem der zu befestigende Gegenstand befestigbar ist,
- und einem am Isolierkörper angebrachten zweiten Befestigungsmittel (3) zur Verankerung der Befestigungsvorrichtung am Untergrund.

15. Verfahren zur wärmebrückenfreien Befestigung eines Gegenstandes an einem eine Dämmschicht aufweisenden Untergrund unter Verwendung einer einen Isolierkörper (4) umfassenden Befestigungsvorrichtung (1),
wobei der Isolierkörper so ausgebildet ist, dass an diesem
- ein erstes Befestigungsmittel (2) anbringbar ist, an welchem der zu befestigende Gegenstand befestigbar ist,
- und ein zweites Befestigungsmittel (3) anbringbar ist, das am Untergrund verankerbar ist,
und wobei an einer der Stirnseiten des Isolierkörpers-Abschnittes (41), der dazu ausgelegt ist, innerhalb der Dämmschicht zu liegen zu kommen, ein Kopf (46) vorgesehen ist, dessen Außendurchmesser größer ist als der Außendurchmesser des diesen tragenden Isolierkörpers-Abschnittes,
wobei der Isolierkörper in die Dämmschicht eingedreht wird bis der Kopf von außen an der Dämmschicht anschlägt.

## Claims

1. Insulating body (4) for a fastening device (1) for the heat-bridge-free fastening of an object to a substrate having an insulation layer, the insulating body being designed such that
- a first fastening means (2), to which the object to be fastened can be fastened, can be attached to it,
- and a second fastening means (3), which can be anchored to the substrate, can be attached to it,
wherein that part (41) of the insulating body which is designed to come to lie within the insulation layer is formed by a cylindrical body having an external thread (44).

2. Insulating body according to Claim 1, **characterized in that** the first fastening means (2) and the second fastening means (3) can be attached to mutually opposite sides of the insulating body (4).

3. Insulating body according to Claim 2 or 3, **characterized in that** the fastening means (2, 3) can be attached to the insulating body (4) in such a way that the longitudinal axes of the fastening means and of the insulating body are aligned with each other.

4. Insulating body according to any one of the preceding claims, **characterized in that** the insulating body (4) is designed for the attachment of fastening means (2, 3) formed by threaded rods or threaded pins.

5. Insulating body according to any one of the preceding claims, **characterized in that** the insulating body (4) has cylindrical recesses (42, 47), which are designed for the screwing-in of the fastening means (2, 3).

6. Insulating body according to any one of the preceding claims, **characterized in that** that part (41) of the insulating body (4) which is designed to come to lie within the insulation layer is formed by a shank which can be screwed into the insulation layer.

7. Insulating body according to Claim 6, **characterized in that** the shank (41) is designed to be screwed into a pre-drilled hole in the insulation layer.

8. Insulating body according to Claim 6 or 7, **characterized in that** it is designed for screwing into an insulation layer, the thickness of which is greater than the length of the shank (41).

9. Insulating body according to any one of Claims 6 to 8, **characterized in that** the insulating body (4) furthermore has a head (46), the outer diameter of which is greater than the outer diameter of the shank (41), and which is designed to strike against the insulation layer from the outside when used as intended.

10. Insulating body according to Claim 9, **characterized in that** a sealing ring (49) is provided on that side of the head (46) which faces the insulation layer.

11. Insulating body according to Claim 10, **characterized in that** a recess (48) designed for receiving the sealing ring (49) is provided on that side of the head (46) which faces the insulation layer.

12. Insulating body according to any one of Claims 9 to 11, **characterized in that** a tool application feature (50) is provided on that side of the head (46) which faces away from the insulation layer, to which tool application feature a tool for screwing the insulating body (4) into the insulation layer can be applied.

13. Insulating body according to any one of the preceding claims, **characterized in that** the external thread (44) of the insulating body (4) is a self-tapping thread.

14. Fastening device (1) for the heat-bridge-free fastening of an object to a substrate having an insulation layer, comprising
- an insulating body (4) according to any one of the preceding claims,
- a first fastening means (2) which is attached to the insulating body and to which the object to be fastened can be fastened,
- and a second fastening means (3) which is attached to the insulating body for anchoring the fastening device to the substrate.

15. Method for the heat-bridge-free fastening of an object to a substrate having an insulation layer using a fastening device (1) comprising an insulating body (4),
wherein the insulating body is designed such that
- a first fastening means (2), to which the object to be fastened can be fastened, can be attached to it,
- and a second fastening means (3), which can be anchored to the substrate, can be attached to it,
and wherein a head (46) is provided on one of the end faces of the insulating body portion (41), which is designed to come to lie within the insulation layer, the outer diameter of which head is greater than the outer diameter of the insulating body portion supporting it,
wherein the insulating body is screwed into the insulation layer until the head strikes against the insulation layer from the outside.

## Revendications

1. Corps isolant (4) pour un dispositif de fixation (1) destiné à la fixation sans pont thermique d'un objet sur un support présentant une couche d'isolation, le corps isolant étant conçu de telle sorte que sur celui-ci
- un premier moyen de fixation (2) peut être appliqué, auquel l'objet à fixer peut être fixé,
- et un deuxième moyen de fixation (3) peut être appliqué, qui peut être ancré dans le support,
la partie (41) du corps isolant qui est conçue pour être située à l'intérieur de la couche d'isolation étant formée par un corps cylindrique présentant un filetage extérieur (44).

2. Corps isolant selon la revendication 1, **caractérisé en ce que** le premier moyen de fixation (2) et le deuxième moyen de fixation (3) peuvent être appliqués sur des côtés opposés l'un à l'autre du corps isolant (4).

3. Corps isolant selon la revendication 2 ou 3, **caractérisé en ce que** les moyens de fixation (2, 3) peuvent être appliqués au corps isolant (4) de telle sorte que les axes longitudinaux des moyens de fixation et du corps isolant soient alignés les uns avec les autres.

4. Corps isolant selon l'une des revendications précédentes, **caractérisé en ce que** le corps isolant (4) est conçu pour l'application de moyens de fixation (2, 3) formés par des tiges filetées ou des goujons filetés.

5. Corps isolant selon l'une des revendications précédentes, **caractérisé en ce que** le corps isolant (4) présente des évidements cylindriques (42, 47) conçus pour le vissage des moyens de fixation (2, 3).

6. Corps isolant selon l'une des revendications précédentes, **caractérisé en ce que** la partie (41) du corps isolant (4), qui est conçue pour être située à l'intérieur de la couche d'isolation, est formée par une tige pouvant être vissée dans la couche d'isolation.

7. Corps isolant selon la revendication 6, **caractérisé en ce que** la tige (41) est conçue pour être vissée dans un trou pré-percé dans la couche d'isolation.

8. Corps isolant selon la revendication 6 ou 7, **caractérisé en ce qu'**il est conçu pour être vissé dans une couche d'isolation dont l'épaisseur est supérieure à la longueur de la tige (41).

9. Corps isolant selon l'une des revendications 6 à 8, **caractérisé en ce que** le corps isolant (4) présente en outre une tête (46) dont le diamètre extérieur est supérieur au diamètre extérieur de la tige (41), et qui est conçue pour venir en butée contre l'extérieur de la couche d'isolation lors d'une utilisation conforme.

10. Corps isolant selon la revendication 9, **caractérisé en ce qu'**un anneau d'étanchéité (49) est prévu sur le côté de la tête (46) orienté vers la couche d'isolation.

11. Corps isolant selon la revendication 10, **caractérisé en ce qu'**un évidement (48) conçu pour recevoir l'anneau d'étanchéité (49) est prévu sur le côté de la tête (46) orienté vers la couche d'isolation.

12. Corps isolant selon l'une des revendications 9 à 11, **caractérisé en ce qu'**un logement d'outil (50) est prévu sur le côté de la tête (46) opposé à la couche d'isolation, sur lequel un outil destiné au vissage du corps isolant (4) dans la couche d'isolation peut être placé.

13. Corps isolant selon l'une des revendications précédentes, **caractérisé en ce que** le filetage extérieur (44) du corps isolant (4) est un filetage autotaraudeur.

14. Dispositif de fixation (1) destiné à la fixation sans pont thermique d'un objet sur un support présentant une couche d'isolation, comprenant
- un corps isolant (4) selon l'une des revendications précédentes,
- un premier moyen de fixation (2) appliqué au corps isolant, auquel l'objet à fixer peut être fixé,
- et un deuxième moyen de fixation (3) appliqué au corps isolant pour l'ancrage du dispositif de fixation dans le support.

15. Procédé de fixation sans pont thermique d'un objet sur un support présentant une couche d'isolation au moyen d'un dispositif de fixation (1) comprenant un corps isolant (4), le corps isolant étant conçu de telle sorte que sur celui-ci,
- un premier moyen de fixation (2) peut être appliqué, auquel l'objet à fixer peut être fixé,
- et un deuxième moyen de fixation (3) peut être appliqué, qui peut être ancré dans le support,
et une tête (46) dont le diamètre extérieur est supérieur au diamètre extérieur de la section de corps isolant qui la porte étant prévue sur l'une des faces d'extrémité de la section de corps isolant (41) conçue pour être située à l'intérieur de la couche d'isolation,
le corps isolant étant vissé dans la couche d'isolation jusqu'à ce que la tête vienne en butée contre l'extérieur de la couche d'isolation.
